# EUROPEAN PATENT APPLICATION

(11) **EP 1 186 265 A2**
(43) Date of publication of application: **13.03.2002**
(21) Application number: 01870195.3
(22) Date of filing: 12.09.2001
(51) Int. Cl.: A47F 3/14, A47F 7/00

(54) **Panel for transporting and displaying goods**

(30) Priority: 12.09.2000 EP 00870199
(71) Applicant: Vandewiele, José, 8790 Waregem (BE); Vanhie, Jan, 8880 Sint-Eloois-Winkel (BE)
(72) Inventor: Vandewiele, José, 8790 Waregem (BE); Vanhie, Jan, 8880 Sint-Eloois-Winkel (BE)
(74) Representative: Luys, Marie-José A.H.

(57) **Abstract**

A panel for transporting and displaying goods, more particularly plants or flowers or the like, the panel being provided to be hung in a cart, the panel comprising a moulded plastic body (1) and at least one metal suspension element (2) for suspending the panel in the cart, the at least one metal suspension element (2) being held in the plastic body (1) in a boltless manner.

## Description

This invention relates to a panel for transporting and displaying goods, more particularly plants or flowers or the like, the panel being provided to be hung in a cart.

Flowers and plants are commonly transported to markets on so-called flower carts. These carts comprise a metal frame which is supported on wheels. The metal frame has means, e.g. cross bars, for supporting panels on different levels. The goods are transported and displayed on these panels.

Known panels of this kind are mostly constructed from wooden boards which are fixed to a metal suspension frame by means of screws or nails. This has the disadvantage that the construction of the panels and also the dismantling of the damaged panels for recycling purposes are time-consuming.

It is an aim of the invention to provide a panel for transporting and displaying goods of which the construction and dismantling is less time-consuming.

This aim is achieved according to the invention in that the panel comprises a moulded plastic body and at least one metal suspension element for suspending the panel in the cart, the metal suspension element being held in the plastic body in a boltless manner. As a result, constructing the panel of the invention comprises the steps of moulding the plastic body, constructing the metal suspension element and mounting the metal suspension element in the plastic body. In this last step, the use of bolts, such as for example screws, nails or the like, is avoided, so that the time needed for constructing the panel can be reduced. As the use of bolts is avoided, also the time needed for dismantling the panel when damaged can be reduced. The boltless construction also has the advantage that no metal parts extend through holes in the plastic, so that the risk of tearing the plastic can be reduced. This can enhance the durability of the panel of the invention.

As the panel of the invention is constructed in plastic and metal, as opposed to wood and metal in the prior art, the weight of the panel can be reduced. Furthermore, as plastic is a material which is easier to recycle than wood, the recyclability of the panel can be enhanced. The plastic of the body can be fully reused for moulding a new panel body and the metal suspension element, which is less liable to damage than the plastic body, can be in itself reused in a new panel or can also be melted for constructing a new metal suspension element. Both the plastic of the body and the metal of the suspension element can also be used as material for constructing any other products. Constructing the body in plastic also has the advantage that the body does not provide a matrix for fungi, as opposed to the wood used in prior art panels.

Preferably, the moulded plastic body of the panel of the invention is provided with clamping means for holding the metal suspension element by means of a clamping force. In this way it can be ensured that the metal suspension element is held in the plastic body.

The suspension element preferably comprises recesses and/or holes for receiving corresponding protrusions on the clamping means of the plastic body. This has the advantage that the suspension element is mountable in the plastic body by clicking, so that the construction of the panel can be simplified. Providing the recesses and/or holes and corresponding protrusions can also increase the amount of force which has to be applied to the suspension element for removing it from the plastic body, so that the risk of unwanted removal of the suspension element from the plastic body can be reduced.

The suspension element preferably extends over substantially the whole width of the plastic body and is provided to suspend the body on two opposing sides. In this way, the suspension element reinforces the plastic body, so that the amount of weight which can be supported by the panel can be increased.

The plastic body preferably has a bottom side provided with first ribs and second ribs extending in substantially perpendicular directions. The height of the ribs preferably increases towards the middle of the body. These ribs provide further reinforcement to the panel, so that its supporting power can be further increased. Additionally, the bottom side is preferably provided with third ribs extending in a direction intersecting with the directions of the first and second ribs for further increasing the supporting power.

The plastic body preferably has openings for accommodating a person's hands. In this way, the panel can easily be hung in or removed from the cart by a single person. When the panel is used for supporting plants or flowers, the openings also enable the watering of the plants or flowers from below, by placing the panel in a water bed.

In a preferred embodiment of the panel of the invention, the panel comprises at least one further metal element which is held by further clamping means provided on the plastic body. This further metal element has a lip which extends through an opening in the suspension element. This further metal element can further increase the supporting power of the panel.

The clamping means and the suspension element are preferably provided with corresponding holes for receiving a rivet. These corresponded holes are preferably provided in the panel of the invention to achieve that, when the suspension element is no longer sufficiently held in the plastic body due to wearing out of the plastic, the connection between the suspension element and the body can be repaired by inserting a rivet in the corresponding holes. This can increase the life span of the panel of the invention.

In a preferred embodiment of the panel of the invention, electronic identification means are provided on the panel. By means of these electronic identification means, the owner of the panel can be identified and the panel can be provided with a unique identification number. In this way, the panel can be traced, i.e. it can be followed where (e.g. at which market) it is located at what time and it can be ensured that the panel is returned to its owner. The electronic identification means can for example be a microchip or any other electronic identification means known to the person skilled in the art.

The invention will be further elucidated by means of the following description and the appended figures.

Figure 1 shows a top view of the plastic body of a preferred embodiment of the panel according to the invention.

Figure 2 shows a bottom view of the plastic body of a preferred embodiment of the panel according to the invention.

Figure 3 shows a suspension element mountable in the plastic body of figures 1 and 2.

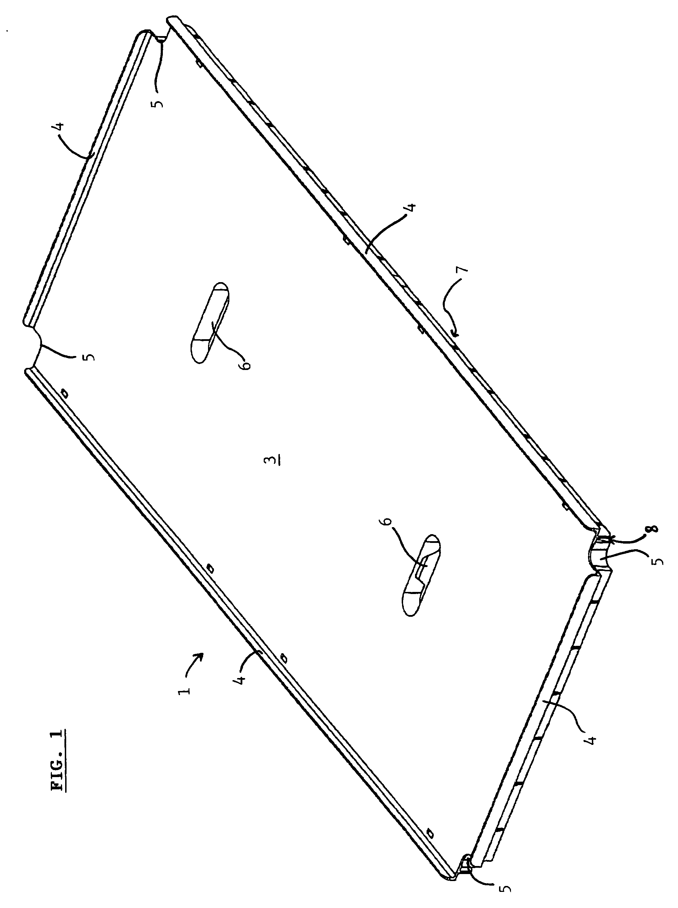

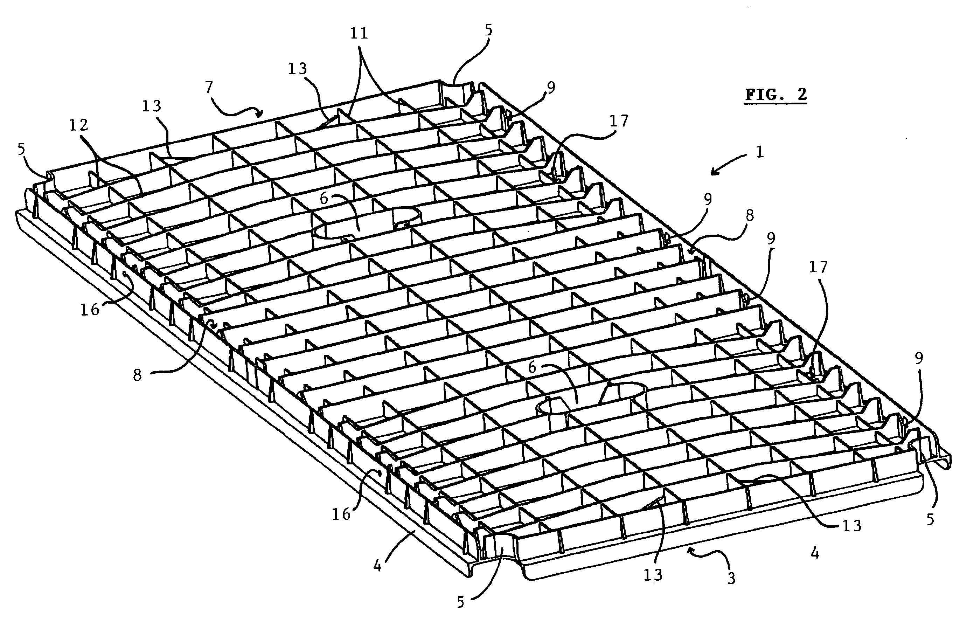

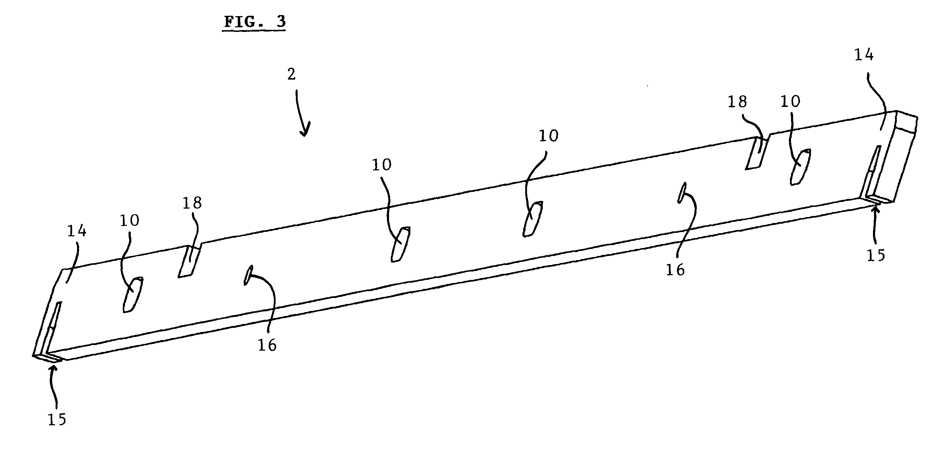

The preferred embodiment of the panel according to the invention shown in figures 1-3 comprises a plastic body, which is shown in figures 1 and 2, and two suspension elements 2, shown in figure 3, which are mounted in the plastic body 1 and by means of which the panel can be hung in a cart. The suspension elements 2 are held in the plastic body 1 in a boltless manner. The panel of the invention may however also comprise one, three or more suspension elements.

As shown on figure 1, the plastic body 1 of the panel of the invention has a flat top side 3 on which goods, e.g. plant or flower pots, can be supported. The top side 3 has upstanding edges 4 for preventing that the goods supported on the panel fall off the top side during transport. The plastic body 1 has cut-out corners 5 which are provided to include upstanding bars of the frame of the cart (not shown), in which the panel is hung.

Two openings 6 for accommodating a person's hands are provided in the plastic body 1 with a suitable distance in between the openings 6, so that the panel can be carried by a single person. When the panel is used for supporting flower or plant pots, these openings 6 also provide a passageway for water, so that the plants or flowers can be watered from below the panel by placing it in a waterbed. When the plants or flowers are watered from above the panel, the openings 6 provide a passageway through which excess water can flow out.

The body 1 shown in figures 1 and 2 has a substantially rectangular shape with the openings 6 located centrally between the longitudinal sides of the panel. The rectangular shape is common for panels designed for flower carts, which are dimensioned in accordance with an international standard. However, the body 1 of the panel of the invention may also have any other shape deemed suitable by the person skilled in the art.

The plastic body 1 is preferably constructed as a single-piece moulded body in polypropylene, which material is preferred for its recyclability. However, the plastic body may also be moulded from any other mouldable plastic material known to the person skilled in the art.

As shown on figure 2, the plastic body 2 has a bottom side 7 which is provided with two grooves 8. These grooves 8 are each provided to hold one suspension element 2 according to figure 3 and are designed such that they hold the suspension elements 2 by means of a clamping force, i.e. with a width slightly smaller than that of the suspension elements 2.

The grooves 8 are preferably provided with protrusions 9, which are received in corresponding holes 10 in the suspension elements 2. In this way, the risk that the suspension elements 2 are removed from or fall out of the grooves 8 can be reduced.

The plastic body 1 comprises first ribs 11, which extend in longitudinal direction of the body 1, and second ribs 11, which extend in transverse direction, so substantially perpendicular to the first ribs 12. The ribs 11, 12 increase in height towards the middle of the plastic body 1, which can enhance the supporting power of the panel. The first and second ribs 11, 12 are preferably uniformly distributed over substantially the whole of the bottom side 7 of the body 1.

Preferably, the body 1 also comprises third ribs 13, which extend in a direction intersecting with that of the first and second ribs 11, 12. These third ribs 13 can further enhance the supporting power of the panel. They are preferably provided at least near the transverse sides of the panel, to locally enhance the strength of the panel at these sides. The reason for this is that the panel in use in the cart is often subjected to heavy weight at its sides, as they are often climbed by persons reaching for goods on superposed panels. The third ribs may however also be provided on the whole of the bottom side of the plastic body 1.

The suspension element 2 which is inserted in the grooves 8 of the plastic body 1 is shown in figure 3. It comprises holes 10 for receiving the protrusions 9 which are provided in the grooves 8. The length of the element 2 is substantially equal to the width (i.e. the longitudinal dimension) of the plastic body 1, so that the suspension element, which is constructed in metal, reinforces the plastic body 1 and the supporting power of the panel can be enhanced. The ends 14 of the suspension element 2 protrude into the cut-out corners 5 of the body 1 and are provided with notches 15. The panel is hung in the cart by placing the notches 15 over crossbars of the cart.

The suspension element 2 and the plastic body 1 are provided with corresponding holes 16 for receiving a rivet (not shown). These opening provide an easy way of repairing the panel after it has been used for a long time and the plastic of the grooves has worn. Due to the wearing of the plastic, it might occur that the suspension element 2 is no longer sufficiently held in the body 1 and falls out. By providing the corresponding holes 16, the connection between the suspension element 2 and the body 1 can be repaired at this point in time. As a result, the holes 16 provide an easy way of repairing the panel after long-term use, so that its life span can be increased.

Preferably, the panel of the invention further comprises at least one further metal element (not shown) for increasing the supporting power of the panel. The plastic body 1 shown in figure 2 comprises further clamping protrusions 17 for holding such further metal elements. The suspension element 2 shown in figure 3 has additional openings 18, in which lips of such further metal elements are insertable. In this way, the further metal elements form an additional connection between the suspension element 2 and the plastic body 1, so that the supporting power of the panel can be further enhanced.

The panel is further preferably provided with electronic identification means (not shown), such as for example a microchip or other. In this way, the panel can be provided with information, such as for example its owner, a unique identification number, or any other information. In this way, the panel can be traced, i.e. it can be followed where (e.g. at which market) it is located at what time and it can be ensured that the panel is returned to its owner.

## Claims

1. A panel for transporting and displaying goods, more particularly plants or flowers or the like, the panel being provided to be hung in a cart, **characterised in that** the panel comprises a moulded plastic body (1) and at least one metal suspension element (2) for suspending the panel in the cart, the at least one metal suspension element (2) being held in the plastic body (1) in a boltless manner.

2. A panel according to claim 1, **characterised in that** the plastic body (1) of the panel of the invention is provided with clamping means (8) for holding the metal suspension element (2) by means of a clamping force.

3. A panel according to claim 2, **characterised in that** the suspension element (2) comprises recesses and/or holes (10) for receiving corresponding protrusions (9) on the clamping means (8) of the plastic body (2).

4. A panel according to any one of the claims 1-3, **characterised in that** the suspension element (2) extends over substantially the whole width of the plastic body (1) and is provided to suspend the body (1) on two opposing sides.

5. A panel according to any one of the claims 1-4, **characterised in that** the plastic body (1) has a bottom side (7) which is provided with first ribs (11) and second ribs (12) extending in substantially perpendicular directions, the first and second ribs (11, 12) increasing in height towards the middle of the plastic body (1).

6. A panel according to claim 5, **characterised in that** the bottom side (7) is provided with third ribs (13) extending in a direction intersecting with the directions of the first and second ribs (11, 12).

7. A panel according to any one of the claims 1-6, **characterised in that** the plastic body (1) has openings (6) for accommodating a person's hands.

8. A panel according to any one of the claims 1-7, **characterised in that** the panel comprises at least one further metal element which is held by further clamping means (17) on the plastic body (1), the further metal element having a lip which extends through an opening (18) in the suspension element (2).

9. A panel according to any one of the claims 1-8, **characterised in that** the plastic body (1) and the suspension element (2) are provided with corresponding holes (16) for receiving a rivet.

10. A panel according to any one of the claims 1-9, **characterised in that** the panel is provided with electronic identification means.
